Europäisches Patentamt

European Patent Office

Office européen des brevets

(11) Publication number: **0 074 181**
**B1**

(12) **EUROPEAN PATENT SPECIFICATION**

(45) Date of publication of patent specification: **09.10.85**

(21) Application number: **82304135.5**

(22) Date of filing: **05.08.82**

(51) Int. Cl.⁴: **F 16 D 55/228, B 60 B 21/02**

(54) Disc brakes.

(30) Priority: **29.08.81 GB 8126424**
**18.03.82 GB 8207952**

(43) Date of publication of application:
**16.03.83 Bulletin 83/11**

(45) Publication of the grant of the patent:
**09.10.85 Bulletin 85/41**

(84) Designated Contracting States:
**BE DE FR GB IT SE**

(56) References cited:
**DE-A-1 475 398**
**DE-A-2 946 674**
**DE-C- 975 696**
**FR-A-1 141 929**
**GB-A- 900 706**
**GB-A-1 045 109**
**GB-A-2 072 280**
**US-A-4 022 297**

(73) Proprietor: **AUTOMOTIVE PRODUCTS PUBLIC**
**LIMITED COMPANY**
**Tachbrook Road**
**Leamington Spa Warwickshire CV31 3ER (GB)**

(72) Inventor: **Bass, Richard Arnold**
**12 Normandy Close**
**Hampton Magna Warwick Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

This invention relates to disc brakes for motor cycles.

The use of disc brakes on motor cycles is now common. On high powered motor cycles it is known to use twin disc brakes, with a disc and brake caliper on each side of the motor cycle wheel. A typical disc used on motor cycles is fixed onto the wheel hub and the caliper straddles the outer periphery of the disc and applies a braking load to outer peripheral margin of the disc.

As the speed of motor cycles continues to increase it is necessary for there to be an increase in braking capacity. One means of achieving an increase in the braking capacity is to increase the friction area of the disc. One means of increasing the area of the disc is to increase its diameter. This can be achieved by having a large diameter annular disc secured by its outer periphery to the wheel and having the caliper straddling the inner periphery of the disc. Such a solution is shown in British Patent No. 900 706, in which a disc brake is disclosed having an annular disc secured on a wheel rotatable about an axle and a brake caliper which straddles the inner periphery of the disc. The annular disc being secured by its outer peripheral margin to the rim of the wheel by circumferentially spaced fastening means thereby maximising the diameter of the disc.

A problem associated with this construction is that when the caliper is fixed to a stationary member eg. a suspension fork leg in the case of a motor cycle, if the wheel is not correctly fitted in the forks, the wheel 'run out' at the larger diameter outer periphery is much greater than for the smaller diameter conventional brake disc.

The present invention provides a method of reducing 'run out' between the brake disc and the caliper.

Accordingly there is provided a motor cycle disc brake of the type previously described characterised in that the axle of the wheel is held by a pair of fork legs of a motor cycle and the caliper is fixed to one of said fork legs and each fastening means allows the disc both a limited axial and radial play relative to the fork legs.

Preferably the fastening means is a means as claimed in Claim 2.

Another problem associated with motor cycle disc brakes in particular, is that if a wheel has to be removed to make for example a puncture repair then it is usually necessary to remove the brake caliper from its fixed support, usually a fork leg stanchion to enable the wheel to be removed. Also on some motor cycles it may be necessary to remove the caliper from its support to enable friction material pads to be replaced. This is especially so for those brakes described above.

Accordingly there is also provided a motor cycle disc brake in which a caliper body is secured to a fixed support on a fork leg by a pair of spaced securing members, at least one of said securing members engaging in an open ended slot in one of the caliper body and support so that the body can be released from the support without the complete release of the one securing member from the other of the caliper body and support.

Conveniently the other fastening member is a quick release pin which passes through an aperture in the caliper body.

The invention will be described by way of example and with reference to the accompanying drawings in which:—

Figure 1 is an elevation of a sector of a motor cycle fork and wheel showing a disc brake according to this invention fitted in situ;

Figure 2 is a radial section on the line II—II through a wheel and in situ disc brake;

Figure 3 is an enlarged portion of the disc and fastening means as shown in Figure 2;

Figure 4 is a section on the line IV—IV in Figure 2 showing a quick release pin;

Figure 5 is a section on the line IV—IV but showing use of a bolt instead of a quick release pin;

Figure 6 is a section on the line VI—VI in Figure 1; and

Figure 7 shows the lug on the fixed support as is utilised in the herein disclosed disc brake.

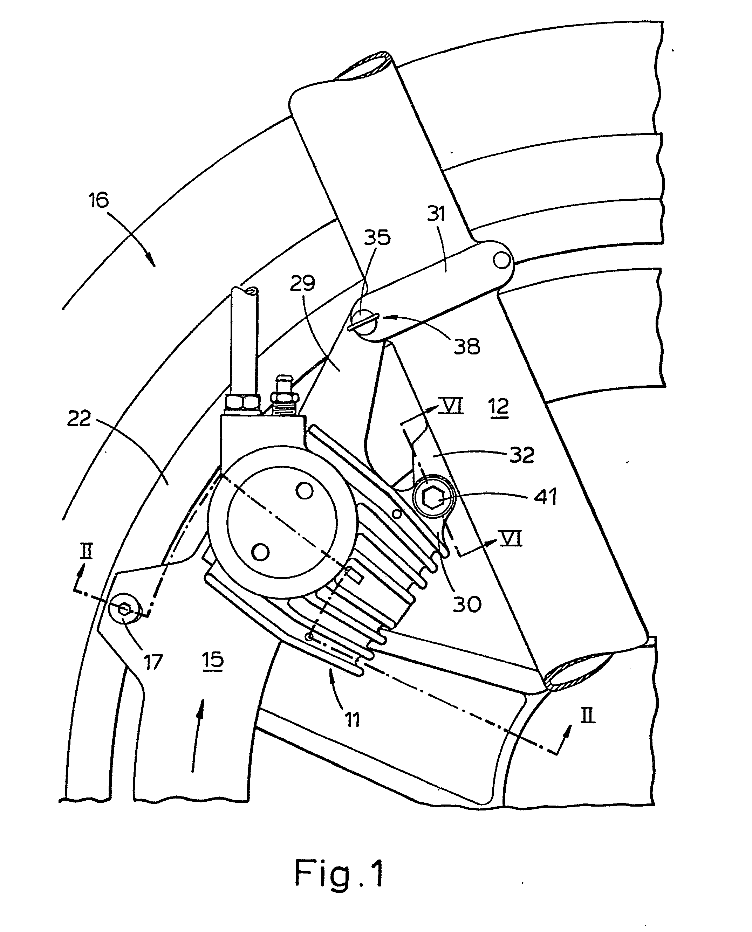

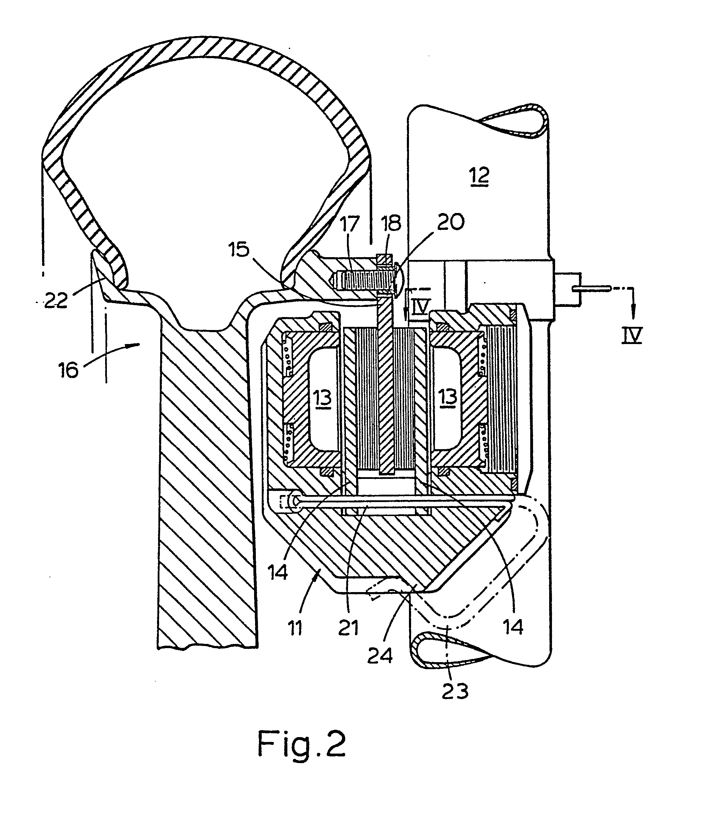

With reference to Figures 1 to 3, a disc brake caliper 11 is mounted on the stanchion 12 of a motor cycle fork leg. The brake caliper 11 is of the type in which two opposed hydraulic cylinders 13 are arranged to press friction pads 14 against opposed friction faces of a disc 15.

The disc 15 is an annular disc having its outer peripheral margin fastened directly to the rim 22 of a wheel 16. The wheel rotates about an axle (not shown) held by a pair of fork legs, the stanchion of only one of which is shown. The wheel 16 is made of cast aluminium alloy but could be formed by other methods. There are ten or twelve circumferentially spaced bolts 17 which are used for fastening the disc to the wheel. The bolts 17 each pass through a bush 18 which is of a greater length than the thickness of the disc, so that when the bolt is screwed against the spacer the head of the bolt 17 is spaced from the wheel rim 16 by a distance of between 0.003" and 0.013" (0.08mm—0.330mm) in excess of the thickness of the disc. This play allows the disc to move axially relative to the rotation of the wheel about its axle and thereby corrects for any wheel run out within the above limits relative to the fork stanchion 12. The bushes 18 each pass through radially elongated holes 19 in the disc and have some radial clearance 20 (0.05"—0.06"—1.25 mm—1.50 mm) on the inner and outer circumferential edges thereof to allow for thermal expansion of the disc during the application of the brakes, whilst the bushes locate the disc on the radial edges of their respective holes.

The caliper 12 straddles the inner periphery of the disc and the pads 14 are held in the caliper by split pins 21 which pass axially through the bottom of the caliper. The pads 14 are withdrawn from the caliper by removing the split pins 21 and withdrawing the pads radially outwardly relative to the wheel.

Alternatively the pads may be held in position by spring clips 23 (shown in dotted outline) which pass through the caliper in the same manner as the split pins 21, but clip over a detent 24 on the outer surface of the caliper. The clip 23 provides a quick means of releasing the pads from the caliper by merely withdrawing the spring clip 23 over the detent 24.

The caliper 11 is secured to the fork stanchion 12 on that side of the fork such that on application of the brake with motor cycle moving forward the torque load pushes the caliper against the stanchion. The caliper 11 has two spaced arms 29 and 30 which are secured to a pair of lugs 31 and 32 respectively on the fork stanchion 12.

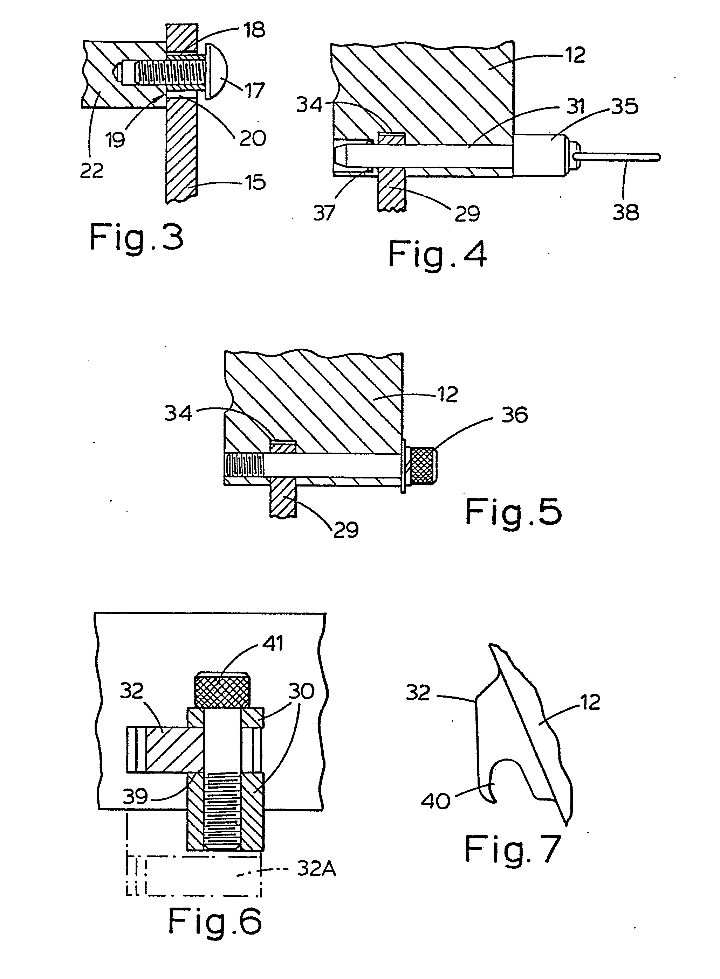

The upper arm 31 is received in slot 34 in the lug 31 and is held in place by a proprietory quick release pin 35 known as an AVDEL pin (Figure 4). The AVDEL pin has a pair of diametrically opposed balls 37 which can be moved radially in and out of the pin body to either lock or release the pin from its desired position. The pin is operated by means of a wire ring 38 attached to a spring loaded case in the pin.

The lower arm 30 (Figure 6) has a slot 39 therein which receives the lug 32 on the stanchion 12. The lug 32 (Figure 7) has an open ended slot 40 therein and is positioned on the stanchion 12 so as to be axially off set from the disc 15. A pinch bolt 41 passes through the caliper arm 30 and the slot 40 and clamps the arm 30 around the lug when the caliper is secured in position. The clamping of the arm 30 about the lug 32 helps prevent the caliper tilting when the brakes are applied.

In an alternative construction the lug 32A (see dotted lines, Figure 6) is moved to be axially in line with the disc thereby making it unnecessary to use a pinch bolt to prevent tilting since the clamping action of the caliper is in line with the mounting lug 32. Therefore an ordinary pin may be used instead of a pinch bolt and the pin could be accommodated in a plastic or rubber sleeve in the caliper body.

To quickly remove the caliper from the stanchion 12 the quick release pin 35 is removed from the lug 31, and the pinch bolt 41 is slackened allowing the caliper to be swivelled and the open ended slot 39 allows the caliper to be removed from the slot 40 on the stanchion.

Such a quick release system is particularly useful on racing motor cycles in which a speed change of pads 14 may be necessary. For road bikes the quick release pin 35 may be replaced by a bolt 36 (see Figure 5).

Whilst the invention has been described utilising bolts 17 and suitable bushes as the means for fastening the disc to the wheel rim it is envisaged that other suitable fastening means such as shouldered bolts and shoulder studs could be used as ready alternatives.

## Claims

1. A disc brake having an annular disc (15) secured on a wheel (16) rotatable about an axle and a brake caliper (11) which straddles the inner periphery of the disc (15), the annular disc (15) being secured by its outer peripheral margin to the rim (22) of the wheel (16) by circumferentially spaced fastening means (17, 18) characterised in that the axle of the wheel (16) is held by a pair of fork legs (12) of a motor cycle and the caliper (11) is fixed to one of said fork legs and each fastening means allows the disc (15) both a limited axial and radial play relative to the fork legs (12).

2. A disc brake as claimed in claim 1, characterised in that each fastening means comprises a bolt (17) passing through a bush (18) of greater length than the thickness of the disc (15), each bush (18) being accommodated in a radially elongated hole (19) in the outer margin of the disc (15), the radial edges of the holes (19) cooperating with the bushes (18) to locate the disc (15).

3. A disc brake as claimed in claim 1 or claim 2, characterised in that the caliper (11) is secured to a fork leg (12) by a pair of spaced securing members (35) and (41), one of said securing members (41) being engageable in an open ended slot (40) in one of the caliper (11) and the fork leg (12) so that the caliper (11) can be released from the fork leg without the complete release of the one securing member (41) from the other of the caliper (11) and the fork leg (12).

4. A disc brake as claimed in claim 3, characterised in that the open ended slot (40) is in a lug (32) on the fork leg, and the securing member (41) pinches the lug (32) in a slot (39) in the caliper (11) between two portions thereof.

5. A disc brake as claimed in claim 3 or claim 4, characterised in that the other securing member (35) is a quick release pin which passes through both the caliper (11) and the fork leg (12).

6. A disc brake as claimed in claim 3 or claim 5 when dependant upon claim 3, characterised in that the open ended slot (40) is in a lug (32A) secured to the fork leg (12) and axially aligned with the disc (15) and said one of the securing members (41) is a pin which is fitted into a resiliently bushed hole in the caliper body.

7. A disc brake as claimed in any preceding claim, characterised in that the caliper (11) is of the type in which two opposed hydraulic cylinders (13) are arranged to press friction pads (14) against opposed friction faces of the disc (15).

## Patentansprüche

1. Scheibenbremse mit einer ringförmigen Scheibe (15), die an einem um eine Achse drehbares Rad (16) befestigt ist, und einem Bremssattel (11), der den inneren Rand der Scheibe (15) übergreift, wobei die ringförmige Scheibe (15) mit ihrem äußeren Rand an der Felge (22) des Rades (16) durch in Umfangsrichtung beabstandete Befestigungsmittel (17, 18) befestigt ist, dadurch gekennzeichnet, daß die Achse des Rades (16) von einem Paar Gabelbeine (12) eines Motorrades gehalten wird und der Sattel (11) an einem der Gabelbeine befestigt ist und jedes Befestigungsmittel der Scheibe (15) sowohl ein gebrenztes axiales als auch radiales Spiel bezüglich der Gabelbeine (12) gestattet.

2. Scheibenbremse nach Anspruch 1, dadurch gekennzeichnet, daß jedes Befestigungsmittel eine Schraube (17) aufweist, die durch eine Büchse (18) mit einer größeren Länge als die Dicke der Scheibe (15) hindurchgeht, wobei jede Büchse (18) in einem radial verlängerten Loch (19) in dem äußeren Rand der Scheibe (15) untergebracht ist und die radialen Ränder der Löcher (19) mit den Büchsen (18) zusammenwirken, um die Scheibe (15) an Ort und Stelle zu halten.

3. Scheibenbremse nach Anspruch 1 oder Anspruch 2, dadurch gekennzeichnet, daß der Sattel (11) an einem Gabelbein (12) durch ein Paar beamstandeter Befestigungsteile (35) und (41) befestigt ist, wobei eines der Befestigungsteile (41) in einen ein offenes Ende aufweisenden Schlitz (40) in einem von zwei durch den Sattel (11) und das Gabelbein (12) dargestellten Teilen einführbar ist, so daß der Sattel (11) von dem Gabelbein gelöst werden kann, ohne daß das eine Befestigungsteil (41) von dem anderen der beiden durch den Sattel (11) und das Gabelbein (12) dargestellten Teile vollständig gelöst werden muß.

4. Scheibenbremse nach Anspruch 3, dadurch gekennzeichnet, daß der ein offenes Ende aufweisende Schlitz (40) in einer Nase (32) an dem Gabelbein sich befindet und das Befestigungsteil (41) die Nase (32) in einem Schlitz (30) in dem Sattel (11) zwischen zwei Teile von ihm einklemmt.

5. Scheibenbremse nach Anspruch 3 oder Anspruch 4, dadurch gekennzeichnet, daß das andere Befestigungsteil (35) ein Schnellösstift ist, der sowohl durch den Sattel (11) als auch das Gabelbein (12) hindurchgeht.

6. Scheibenbremse nach Anspruch 3 oder Anspruch 5, wenn abhängig von Anspruch 3, dadurch gekennzeichnet, daß sich der ein offenes Ende aufweisende Schlitz (40) in einer Nase (32A) befindet, die an dem Gabelbein (12) befestigt ist und mit der Scheibe (15) axial fluchtet, und das eine Befestigungsteil (41) ein Stift ist, der in einer elastischen Büchse in einem Loch in dem Sattelgehäuse angeordnet ist.

7. Scheibenbremse nach einem vorhergehenden Anspruch, dadurch gekennzeichnet, daß der Sattel (11) von einem Typ ist, bei welchem zwei entgegengesetzte Hydraulikzylinder (13) vorgesehen sind, um Bremsbeläge (14) gegen entgegengesetzte Reibflächen der Scheibe (15) zu drücken.

**Revendications**

1. Frein à disque possédant un disque annulaire (15) fixé sur une roue (26) qui tourne autour d'un axe, et un étrier de frein (11) à cheval sur la périphérie intérieure du disque (15), le disque annulaire (15) étant fixé à la jante (22) de la roue (16) au niveau de son bord périphérique extérieur à l'aide de moyens de fixation (17, 18), circonférentiellement espacés, caractérisé en ce que l'axe de la roue (16) est tenu par une paire de branches de fourche (12) d'une motocyclette et l'étrier (11) est fixé à l'une desdites branches de la fourche, et chaque moyen de fixation donne au disque (15) un jeu limité à la fois dans la direction axiale et dans la direction radiale, par rapport aux branches (12) de la fourche.

2. Frein à disque selon la revendication 1, caractérisé en ce que chaque moyen de fixation comprend une vis (17) qui traverse une bague (18) de longueur supérieure à l'épaisseur du disque (15), chaque bague (18) étant logée dans un trou (19) allongé dans la direction radiale qui est ménagé dans le bord extérieur du disque (15), les bords radiaux des trous (19) coopérant avec les bagues (18) pour fixer la position du disque (15).

3. Frein à disque selon l'une des revendications 1 et 2, caractérisé en ce que l'étrier (11) est fixé à une branche (12) de la fourche par une paire d'éléments de fixation espacés (35) et (41), l'un des éléments de fixation (41) pouvant être engagé dans une fente (40) à extrémité ouverte qui est formée dans l'un des deux éléments constitués par l'étrier (11) et par la branche (12) de la fourche, de sorte que l'étrier (11) peut être retiré de la branche de fourche sans qu'on n'ait à retirer entièrement ledit élément de fixation (41) de l'autre des deux éléments constitués par l'étrier (11) et par la branche (12) de la fourche.

4. Frein à disque selon la revendication 3, caractérisé en ce que la fente (40) à extrémité ouverte est ménagée dans une patte (32) prévue sur la branche de la fourche, et en ce que l'élément de fixation (41) pince la patte (32) dans une fente (39) ménagée dans l'étrier (11) entre deux parties de cet étrier.

5. Frein à disque selon l'une des revendications 3 et 4, caractérisé en ce que l'autre élément de fixation (35) est une broche à démontage rapide qui traverse à la fois l'étrier (11) de la branche (12) de la fourche.

6. Frein à disque selon la revendication 3 ou la revendication 5 rattachée à la revendication 3, caractérisé en ce que la fente (40) à extrémité ouverte est formée dans une patte (32A) fixée à la branche (32) de la fourche et placée axialement dans l'alignement du disque (15), et en ce que ledit élément de fixation (41) est une goupille qui est ajustée dans un trou du corps de l'étrier garni d'une bague élastique.

7. Frein à disque selon l'une quelconque des revendications précédentes, caractérisé en ce que l'étrier (11) est du type dans lequel deux cylindres hydrauliques opposés (13) sont agencés pour presser des garnitures de friction (14) contre des faces de friction opposées du disque (15).

Fig.1

Fig.2

0 074 181

Fig.3

Fig.4

Fig.5

Fig.6

Fig.7

3